Europäisches Patentamt

**European Patent Office**

**Office européen des brevets**

(11) Numéro de publication: **0 395 470**
**A1**

## DEMANDE DE BREVET EUROPEEN

(21) Numéro de dépôt: **90401012.1**

(22) Date de dépôt: **12.04.90**

(51) Int. Cl.⁵: **B23Q 11/00, B23Q 17/09, B23B 49/00**

(30) Priorité: **14.04.89 FR 8904976**

(43) Date de publication de la demande: **31.10.90 Bulletin 90/44**

(84) Etats contractants désignés: **DE ES GB IT NL SE**

(71) Demandeur: **AEROSPATIALE Société Nationale Industrielle 37, Boulevard de Montmorency F-75781 Paris Cédex 16(FR)**

(72) Inventeur: **Le Floch, Daniel, Jean-Louis 12 rue Pitre Grenapin Le Simoun, F-44600 Saint Nazaire(FR)**

(74) Mandataire: **Mongrédien, André et al c/o SOCIETE DE PROTECTION DES INVENTIONS 25, rue de Ponthieu F-75008 Paris(FR)**

(54) **Système de controle de bris d'outil sur centre d'usinage.**

(57) L'invention se rapporte à un système de controle de bris d'outil sur centre d'usinage équipé d'une machine-outil à commande numérique (100) et d'un magasin d'outils (200), système dans lequel sont prévus au moins deux caméras (401, 402), des moyens de traitement et de commande (600), le système permettant ainsi d'obtenir des prises de vues des outils destinés à effectuer l'usinage d'une pièce, selon un ou deux plans, une prise de vues étant effectuée avant usinage et l'autre après, les images obtenues étant ensuite comparées afin de déceler d'éventuelles anomalies sur les outils, les prises de vues par la deuxième caméra (402) étant mises au point à partir de l'information longueur obtenue avec les images de la première caméra.

Application au contrôle de bris d'outil sur les centres d'usinage.

FIG. 1

EP 0 395 470 A1

## SYSTEME DE CONTROLE DE BRIS D'OUTIL SUR CENTRE D'USINAGE

L'invention concerne un système de contrôle de bris d'outil sur centre d'usinage équipé d'une machine à commande numérique et d'un magasin d'outils.

Il existe diverses méthodes permettant d'effectuer un contrôle des outils servant à l'usinage des pièces. Ce contrôle a pour but de connaître de façon automatique l'état des outils qui ont servi à usiner une pièce.

Les différentes méthodes connues qui permettent de faire ce contrôle sont détaillées dans ce qui suit :

Une première méthode consiste à effectuer un palpage mécanique de l'outil au moyen de capteurs. Cette méthode présente l'inconvénient de ne permettre la mesure que de la plus grande longueur ou que du plus grand diamètre de l'outil. Elle ne permet pas de façon simple d'envisager un contrôle de l'outil multicoupe.

Une deuxième méthode consiste à effectuer une mesure de la puissance de broche porte-outil. Or, la mesure de la puissance de broche n'est significative que pour des usinages dans des matériaux de résistance importante avec des outils de diamètre suffisant nécessitant un engagement de puissance tel que les variations de puissance puissent être mesurées.

Une troisième méthode consiste à effectuer l'analyse des fréquences de vibration de l'outil lors de l'usinage. Cette méthode nécessite de placer des capteurs dans des positions particulières et de comparer les fréquences captées avec celles d'un outil sain, lors d'un même usinage.

On a donc au préalable constitué une bibliothèque contenant les différentes caractéristiques de l'outil sain. Cette bibliothèque doit être impérativement gérée.

Une quatrième méthode consiste à effectuer des mesures sur l'outil, par ultrason. Les mesures nécessitent l'utilisation de capteurs spécifiques et d'un liquide différentiel.

L'équipement est donc complexe et difficile d'utilisation car l'équipement servant à effectuer les contrôles doit pouvoir être retiré pour ne pas gêner les opérations d'usinage des pièces durant les différents cycles d'usinage.

Une cinquième et dernière méthode connue consiste à effectuer une comparaison de l'usinage de l'outil avec un modèle préétabli. Le système comporte pour cela une caméra permettant d'effectuer une prise de vues de l'outil après usinage d'une pièce et des moyens de traitement permettent de comparer l'image obtenue à un modèle stocké en mémoire.

Cette méthode nécessite la constitution de modèles de l'ensemble des outils du magasin et l'établissement d'une bibliothèque contenant l'ensemble de tous ces modèles.

Pour des outils de type allongé (forêts, tarauds), une bibliothèque d'images d'outils occupe environ 1k.octet par outil et 2k.octets par outil pour des outils de type compact (fraises).

De façon générale et dans toutes les méthodes qui viennent d'être décrites, le contrôle se fait par comparaison de certaines caractéristiques de l'outil après des opérations d'usinage, par rapport aux mêmes caractéristiques que l'on aura au préalable déterminées pour tous les outils du magasin et que l'on aura stockées en mémoire pour constituer une bibliothèque.

Outre les inconvénients qui ont été signalés et qui sont relatifs à chacune de ces méthodes, elles présentent en plus l'inconvénient de nécessiter l'établissement d'une bibliothèque parfois difficile à gérer et qui prend une grande place en mémoire.

La présente invention a pour objet un système de contrôle de bris d'outil qui permet de résoudre l'ensemble de ces problèmes tout en présentant un caractère entièrement automatique, les phases de contrôle étant insérées entre les phases d'usinage sans contrainte particulière.

La présente invention a pour objet un système de contrôle de bris d'outil basé sur la comparaison d'images de l'outil et dans lequel il n'est pas nécessaire d'établir une bibliothèque de modèles.

La présente invention a plus particulièrement pour objet un système de contrôle de bris d'outil sur centre d'usinage équipé d'un magasin d'outils et d'une machine-outil à commande numérique, ledit système comportant des moyens de prise de vues, des moyens de traitement, des moyens de commande et des moyens de visualisation, principalement caractérisé en ce que :
- les moyens de prise de vues sont aptes à prendre des images de chaque outil du magasin selon au moins un premier plan ;
- les moyens de commande de positionnement sont aptes à mettre en place l'outil qui va opérer l'usinage d'une pièce et à mettre en condition les moyens de prise de vues pour obtenir au moins une image de cet outil selon le premier plan, avant et après que l'outil ait procédé à l'usinage de la pièce ;
- les moyens de traitement et de commande sont aptes à :
. traiter les images obtenues pour procéder à une comparaison de ces deux images,
. délivrer un signal de contrôle positif ou négatif selon le résultat de comparaison,
. affecter l'outil à contrôler à une première classe ou à une deuxième classe en fonction de ses caractéristiques morphologiques obtenues par traitement de l'image de l'outil avant usinage,
. établir un signal de réglage à partir d'une première caractéristique morphologique de l'outil,
. commander et régler la mise au point des moyens de prise de vues à partir de ce signal de réglage pour effectuer une prise de vues avant et après usinage selon au moins un deuxième plan en fonction de la classe à laquelle appartient l'outil.

Selon un aspect de l'invention, les moyens de prise de vues comportent une première caméra pour prendre des vues selon le premier plan et au moins une deuxième caméra pour prendre des vues selon un deuxième plan sensiblement orthogonal au premier.

Selon un autre aspect de l'invention, les moyens de traitement et de commande effectuent un même traitement sur les images prises avant et après que l'outil ait pratiqué un usinage, ce traitement comportant les étapes suivantes :
- échantillonnage et seuillage du signal image pour obtenir un signal d'image numérique contrasté à deux niveaux, un niveau correspondant au noir et un niveau correspondant au blanc,
- calcul de la surface de l'outil à partir de chaque image,
- extraction des contours de l'outil,
- mesure de la longueur de l'outil,
- comparaison des deux images.

Selon un autre aspect de l'invention, le signal de réglage de la mise au point de la deuxième caméra constituant les moyens de prise de vues est obtenue à partir de la mesure de la longueur de l'outil.

Selon une caractéristique particulière de l'invention, la mesure de la longueur de l'outil est obtenue à partir de l'image numérisée de l'outil par comptage du nombre de pixels entre un point de référence et le pixel le plus éloigné sur l'axe de l'outil, ou par calcul de l'extrémité du contour de l'outil.

Selon une autre caractéristique particulière de l'invention, le calcul de la surface de l'outil est obtenu par comptage du nombre de pixels noirs (ou blancs) d'une image.

Selon une autre caractéristique de l'invention, la comparaison des deux images se fait de la manière suivante :
- addition des deux images prises avant et après l'opération d'usinage, la seconde image étant inversée,
- comptage des pixels noirs (ou blancs),
- comparaison du nombre obtenu à un seuil maximum S1, et un seuil minimum S2.

Selon une autre caractéristique de l'invention, la comparaison des deux images se fait après extraction des contours de l'outil, dans ce cas seuls les contours de l'outil sont comparés.

Selon une autre caractéristique de l'invention, la comparaison des images comporte en outre une phase de génération d'un signal traduisant que l'outil est en bon état lorsque le nombre obtenu, après comptage des pixels noirs, est compris entre ces deux seuils, d'un signal traduisant que l'outil est cassé lorsque ce nombre est supérieur au seuil maximum, d'un signal traduisant que l'outil présente une anomalie lorsque ce nombre est inférieur au seuil minimum.

Selon un autre aspect de l'invention, les moyens de traitement et de commande :
- effectuent, outre la mesure de la longueur de l'outil, une mesure de son diamètre et calculent le rapport entre ces deux mesures,
- comparent cette mesure à un seuil préétabli,
- commandent ou non en fonction du résultat de comparaison les prises de vues de l'outil selon le deuxième plan.

D'autres caractéristiques et avantages de l'invention apparaîtront à la lecture de la description détaillée qui suit et qui est faite en référence aux dessins annexés dans lesquels :
   - la figure 1 représente le schéma d'un système de contrôle de bris d'outil selon l'invention;
   - les figures 2, 2a, 3, 3a, 4, 4a, 5, 5a, 5b représentent le schéma d'images d'outils obtenu par le système illustrant des cas de cassures ou d'anomalies.

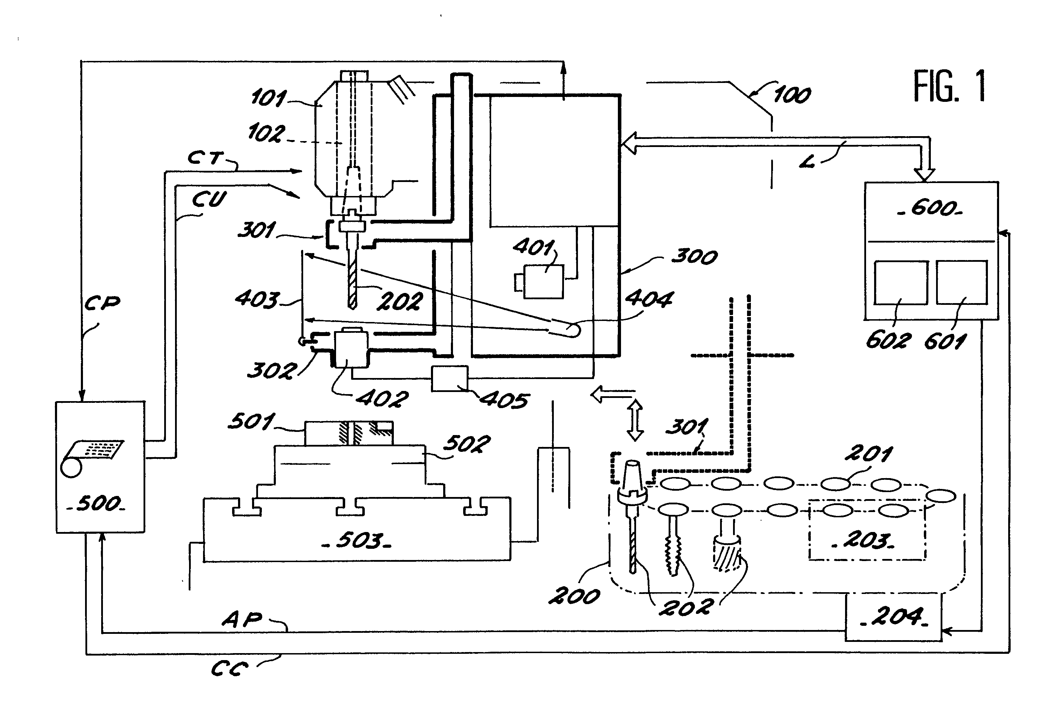

On a représenté sur la figure 1 un schéma permettant d'illustrer l'implantation d'un système de contrôle de bris d'outil conforme à l'invention sur un centre d'usinage équipé d'une machine-outil à commande numérique, la machine représentée à titre d'exemple étant une fraiseuse 100.

Le centre d'usinage est, comme cela a été décrit, équipé d'un magasin d'outils 200 comportant une chaîne de distribution 201 d'outils 202 dans laquelle sont disposés des outils neufs ou considérés comme neufs et dans laquelle certains emplacements 203 sont réservés à des outils abîmés.

La chaine est entraînée par exemple par un moteur avance pas à pas 204.

Des moyens de commande de positionnement permettent de prendre un outil 202 du magasin et de le mettre en place sur la broche tournante porte-outil 102, placée dans la tête 101 de la fraiseuse.

Ces moyens de commande de positionnement sont constitués d'un automate 300 muni de mécanismes connus dont l'un 301 constitue un ensemble de montage-démontage d'outil.

L'automate 300 comporte en outre un autre ensemble 302 rétractable hors-phases de contrôle et destiné pendant les phases de contrôle à positionner des moyens de prise de vues destinés à prendre des images de l'outil monté sur la fraiseuse.

Les moyens de prise de vues 401, 402 sont constitués selon un exemple de réalisation, d'une, deux et éventuellement trois caméras (la troisième caméra est non représentée) permettant d'effectuer des prises de vues selon des plans différents.

On peut bien évidemment envisager une réalisation ne comportant qu'une caméra et prévoir un mécanisme permettant de déplacer cette caméra pour obtenir des prises de vues selon des plans différents.

Selon l'exemple de réalisation décrit, une première caméra 401 est prévue pour faire des prises de vues suivant un premier plan correspondant à un plan parallèle à l'axe des outils.

Une deuxième caméra 402 est prévue pour faire des prises de vues, lorsque cela est nécessaire, suivant un deuxième plan correspondant à un plan orthogonal au premier. Cette caméra est associée à un circuit de commande de mise au point 405 classique.

Une troisième caméra (non représentée) peut être prévue pour effectuer des prises de vues locales de l'outil si cela est nécessaire.

Le pilotage à commande numérique est réalisé de manière classique par un ensemble 500 dans lequel est enregistré le programme d'usinage de la pièce 501 placée sur le plateau tournant 502 de la table d'usinage 503.

Des moyens de traitement et de commande 600, munis d'écrans de visualisation 601, 602 permettent de donner des ordres à chaque ensemble du système, de traiter et d'interpréter les signaux reçus.

Un ensemble d'éclairage 404 et 403 de l'outil en position est également prévu.

Le fonctionnement du système va être détaillé dans la description qui suit.

Lors d'une phase "normale" d'usinage d'une pièce, après contrôle de l'outil, les moyens de visualisation et de commande transmettent un ordre de retrait de l'automate 300 par un signal sur la ligne L qui déclenche l'envoi d'un signal CP de commande de pilotage.

Le programme de pilotage se déroule et envoie en conséquence les signaux de commande de la tête de fraiseuse CT et de commande d'usinage CU. Ce programme déclenche à chaque changement d'outil un signal CC de commande de contrôle.

Les moyens de commande 600 réalisés par un calculateur communiquent avec l'automate par la ligne de transmission série L sur laquelle circule l'ensemble des signaux de commande et les signaux d'image provenant des caméras 401, 402.

Un protocole de communication classique est établi entre le calculateur et l'automate afin d'établir un dialogue entre les deux ensembles. Après une initialisation des deux ensembles par demande du calculateur (celui-ci étant maître) et compte rendu de l'automate (esclave), le dialogue peut commencer.

Les séquences de contrôle d'outil se font à chaque changement d'outil et éventuellement cycliquement durant une opération d'usinage, l'opération étant dans ce cas interrompue momentanément.

Le programme qui pilote la machine à commande numérique peut être interrompu par des commandes d'arrêt du pilotage AP et d'attente de fin de contrôle envoyées par le calculateur.

Selon un autre mode de réalisation, le programme d'usinage peut prévoir des interruptions cycliques de durée déterminée pour permettre les phases de contrôle.

Lors d'une phase de contrôle, l'écran blanc 403 est mis en place, le spot lumineux éclaire l'outil de manière à obtenir un contraste net entre la masse sombre que forme l'outil par rapport à l'écran.

La première caméra 401 prend une première image de l'outil 202 avant usinage, cet outil provient du magasin et est réputé en bon état.

L'image obtenue est une image dans un plan suivant l'axe de l'outil.

Eventuellement, au cours d'usinage et en tout cas à la fin d'une opération d'usinage, cette même caméra prend une deuxième image dans le même plan (la caméra n'étant pas déplacée). Les signaux d'image sont transmis après chaque prise de vues aux moyens de traitement 600 qui numérisent ce signal et le traitent pour procéder à une comparaison des images afin de déterminer si l'outil qui a servi présente une anomalie, s'il a notamment été cassé dans sa longueur ou si des dents sont cassées ou s'il y a un bourrage.

Le calculateur est programmé de manière à :
- traiter les images obtenues pour procéder à leur comparaison,
- délivrer un signal de contrôle positif ou négatif selon le résultat de comparaison,
- affecter l'outil à contrôler à une première classe ou à une deuxième classe en fonction de ses caractéristiques morphologiques,
- établir un signal de réglage à partir d'une première caractéristique morphologique de l'outil,
- commander et régler la mise au point de la deuxième caméra à partir de ce signal de réglage pour effectuer une prise de vues avant et après usinage selon le deuxième plan, dans le cas où l'outil appartient à la deuxième classe (classe d'outils compacts).

De manière plus détaillée, le traitement d'image comporte les étapes suivantes :
- acquisition de l'image par la caméra et transmission du signal d'image correspondant au calculateur,
- échantillonnage et seuillage du signal d'image de manière à obtenir un signal numérique à deux niveaux, un niveau correspondant au noir et un niveau correspondant au blanc,
- calcul de la surface de l'outil à partir de chaque signal d'image,
- extraction des contours de l'outil,
- mesure de la longueur de l'outil,
- comparaison des deux images prises avant et après usinage.

Ces traitements sont les mêmes, que ce signal d'image provienne de l'une ou de l'autre des caméras.

Le signal de réglage de mise au point de la deuxième caméra est obtenu à partir de la mesure de la longueur de l'outil. Les prises de vues par la deuxième caméra sont en conséquence asservies aux mesures obtenues à partir des signaux issus de la première caméra.

Les prises de vues portant sur des détails de l'outil que l'on pourrait obtenir à partir d'une troisième caméra pourraient de la même façon être asservies aux mesures obtenues par la deuxième caméra.

La longueur de l'outil est obtenue à partir de l'image numérisée de l'outil (avant et après usinage) par comptage du nombre de pixels noirs (de points). Ce comptage est effectué entre un point de référence et le pixel noir le plus éloigné sur l'axe de l'outil.

Cette longueur peut également être obtenue par calcul de l'extrémité du contour de l'outil. Le calcul de la surface est obtenu par comptage du nombre de pixels noirs (ou blancs) de l'image.

La comparaison de deux images se fait de la manière suivante :
- addition des deux images prises avant et après l'opération d'usinage, la deuxième image ayant été inversée (inversion de contraste),
- comptage des pixels noirs (ou blancs),
- comparaison du nombre obtenu à un seuil maximum S1 et à un seuil minimum S2.

La comparaison de deux images peut également être faite après extraction des contours par un algorithme classique d'extraction de contours, puis par comparaison des contours. La comparaison des contours peut se faire également par comptage.

La comparaison des images comporte en outre une phase de génération d'un signal traduisant que l'outil est en bon état ou non.

Selon l'exemple considéré, un outil est considéré en bon état lorsque le nombre obtenu après comptage est compris entre les deux seuils.

Un outil est déclaré présenter une anomalie lorsque ce nombre est inférieur au seuil minimum.

Un outil est considéré comme cassé lorsque ce nombre est supérieur au seuil maximum.

Pour les outils allongés (forêts, tarauds, alésoirs,..) la rupture se vérifie généralement par un manque de longueur, une prise de vues selon un plan pris suivant l'axe de l'outil est par conséquent suffisante.

Pour les outils compacts (fraises), les ruptures partielles sont plus fréquentes, c'est pourquoi dans ce cas des prises de vues selon deux plans orthogonaux sont commandées.

Le classement dans l'une ou l'autre des classes, qui a pour but de réduire le nombre de contrôles, est obtenu par exemple en effectuant outre une mesure de la longueur de l'outil, une mesure de son diamètre. On effectue ensuite le calcul du rapport entre ces deux grandeurs que l'on compare à un seuil préétabli. En fonction du résultat de comparaison, les prises de vues par la deuxième caméra sont déclenchées.

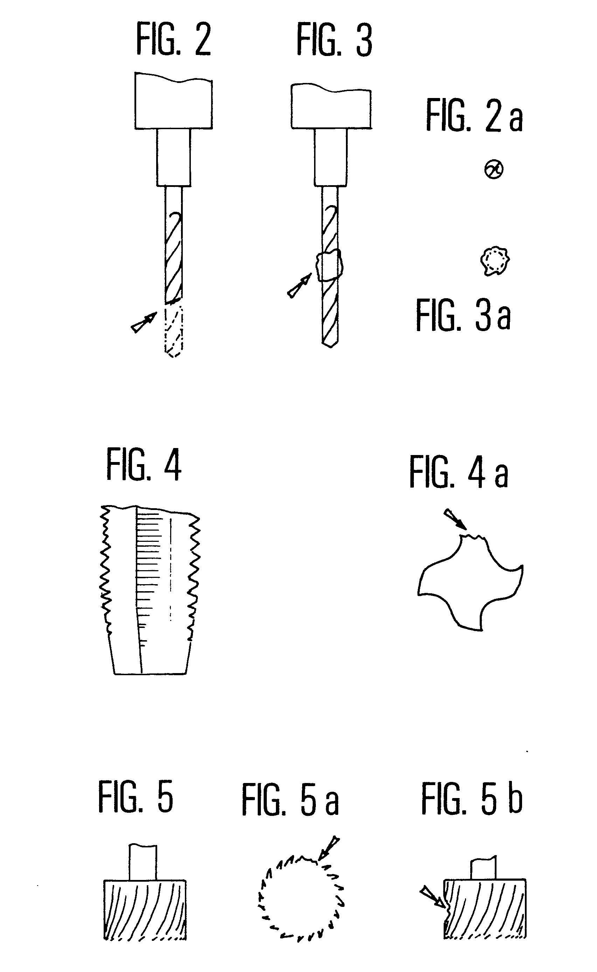

Différentes vues permettant d'illustrer quelques anomalies détectées par le système conforme à l'invention sont représentées sur les figures 2, 2a, 3, 3a, 4, 4a, 5, 5a,5b.

La figure 2 permet d'illustrer le cas d'un forêt cassé. Une prise de vue par la caméra 401 (suivant l'axe du forêt) permet de mettre en évidence cette cassure.

La figure 2a est une vue suivant un plan orthogonal à cet axe. Une telle vue peut être obtenue par la caméra 402 mais n'est pas nécessaire dans le cas du forêt.

La figure 3 permet d'illustrer le cas d'un bourrage sur un forêt. La figure 3a montre une vue pouvant être prise par la caméra 402.

La figure 4 illustre le cas d'un taraud présentant une anomalie. Une prise de vue par la caméra 401 (suivant l'axe du forêt) permet de mettre en évidence cette anomalie.

La figure 4a est une vue suivant un plan orthogonal à cet axe. Une telle vue est obtenue par la caméra 402.

Les figures 5, 5a, 5b représentent des illustrations de fraises. Les anomalies pouvant être détectées par le système sont illustrées sur les figures 5a, 5b.

**Revendications**

1. Système de contrôle de bris d'outil sur centre d'usinage équipé d'un magasin d'outils (200) et d'une machine-outil à commande numérique (100), ledit système comportant des moyens de prise de vues, des moyens de traitement, des moyens de commande et des moyens de visualisation, caractérisé en ce que :
- les moyens de prise de vues (401, 402) sont aptes à prendre des images de chaque outil du magasin selon au moins un premier plan ;

- les moyens de commande de positionnement (300) sont aptes à mettre en place l'outil qui va opérer l'usinage d'une pièce et à mettre en condition les moyens de prise de vues pour obtenir au moins une image de cet outil selon le premier plan, avant et après que l'outil ait procédé à l'usinage de la pièce ;

- les moyens de traitement et de commande (600) sont aptes à :

. traiter les images obtenues pour procéder à une comparaison de ces deux images,

. délivrer un signal de contrôle positif ou négatif selon le résultat de comparaison,

. affecter l'outil à contrôler à une première classe ou à une deuxième classe en fonction de ses caractéristiques morphologiques obtenues par traitement de l'image de l'outil avant usinage,

. établir un signal de réglage à partir d'une première caractéristique morphologique de l'outil,

. commander et régler la mise au point des moyens de prise de vues à partir de ce signal de réglage pour effectuer une prise de vues avant et après usinage selon au moins un deuxième plan en fonction de la classe à laquelle appartient l'outil.

2. Système selon la revendication 1, caractérisé en ce que les moyens de prise de vues comportent une première caméra (401) pour prendre des vues selon le premier plan et au moins une deuxième caméra (402) pour pendre des vues selon un deuxième plan sensiblement orthogonal au premier.

3. Système selon la revendication 1 ou la revendication 2, caractérisé en ce que les moyens de traitement et de commande (600) effectuent un même traitement sur les images prises avant et après que l'outil ait pratiqué un usinage, ce traitement comportant les étapes suivantes :

- échantillonnage et seuillage du signal image pour obtenir un signal d'image numérique contrasté à deux niveaux, un niveau correspondant au noir et un niveau correspondant au blanc,

- calcul de la surface de l'outil à partir de chaque image,

- extraction des contours de l'outil,

- mesure de la longueur de l'outil,

- comparaison des deux images.

4. Système selon l'une quelconque des revendications 1 à 3, caractérisé en ce que le signal de réglage de la mise au point de la deuxième caméra (402) constituant les moyens de prise de vues est obtenu à partir de la mesure de la longueur de l'outil.

5. Système selon la revendication 4, caractérisé en ce que la mesure de la longueur de l'outil est obtenue à partir de l'image numérisée de l'outil par comptage du nombre de pixels entre un point de référence et le pixel le plus éloigné sur l'axe de l'outil, ou par calcul de l'extrémité du contour de l'outil.

6. Système selon la revendication 3, caractérisé en ce que le calcul de la surface de l'outil est obtenu par comptage du nombre de pixels noirs (ou blancs) d'une image.

7. Système selon la revendication 3, caractérisé en ce que la comparaison des deux images se fait de la manière suivante :

- addition des deux images prises avant et après l'opération d'usinage, la seconde image étant inversée,

- comptage des pixels noirs (ou blancs),

- comparaison du nombre obtenu à un seuil maximum S1, et un seuil minimum S2.

8. Système selon la revendication 3 ou 4, caractérisé en ce que la comparaison des deux images se fait après extraction des contours de l'outil et en ce que dans ce cas seuls les contours de l'outil sont comparés.

9. Système selon la revendication 7 ou 8, caractérisé en ce que la comparaison des images comporte en outre une phase de génération d'un signal traduisant que l'outil est en bon état lorsque le nombre obtenu, après comptage des pixels noirs, est compris entre ces deux seuils, d'un signal traduisant que l'outil est cassé lorsque ce nombre est supérieur au seuil maximum, d'un signal traduisant que l'outil présente une anomalie lorsque ce nombre est inférieur au seuil minimum.

10. Procédé selon l'une quelconque des revendications 1 à 9, caractérisé en ce que les moyens de traitement et de commande (600) :

- effectuent, outre la mesure de la longueur de l'outil, une mesure de son diamètre et calculent le rapport entre ces deux mesures,

- comparent cette mesure à un seuil préétabli,

- commandent ou non en fonction du résultat de comparaison les prises de vues de l'outil selon le deuxième plan.

FIG. 1

EP 0 395 470 A1

FIG. 2

FIG. 3

FIG. 2 a

FIG. 3 a

FIG. 4

FIG. 4 a

FIG. 5

FIG. 5 a

FIG. 5 b

Office européen
des brevets

# RAPPORT DE RECHERCHE EUROPEENNE

Numero de la demande

EP  90 40 1012

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-1 437 145  (TOYODA KOKI)<br>* revendications 1,11; pages 2-4; figures 1-3 * | 1 | B 23 Q  11/00<br>B 23 Q  17/09<br>B 23 B  49/00 |
| Y<br><br>A | EP-A-0 142 990  (KEARNEY & TRECKER)<br>* revendications 1-22 * | 1<br><br>3,7 | |
| Y | US-A-4 667 113  (NAKASIMA et al.)<br>* revendications 1,2; figures 1-4 * | 1 | |
| A | DE-A-3 501 533  (SCHMERSAL)<br>* revendications 1,4; figure 1 * | 1 | |
| A | DD-A-  239 369  (AKADEMIE DER WISSENSCHAFTEN DER DDR)<br>* page 1; figures 1-3 * | 1 | |
| A | DD-A-  153 746  (FRANKE et al.)<br>* page 7; figures 1-5 * | 1,3 | DOMAINES TECHNIQUES RECHERCHES (Int. Cl.5) |
| A | SOVIET INVENTIONS ILLUSTRATED<br>Section Mécanique, semaine 8842, abrégé no. 298535, P54, 30 novembre 1988,<br>Derwent Publications Ltd., London, GB;<br>& SU-A-1386381 (METAL CUTTING EQUIP)<br>07.04.1988 | 1 | B 23 B<br>B 23 Q |
| A | FR-A-2 593 103  (CENTRE D'ETUDES ET DE RECHERCHES DE LA MACHINE-OUTIL)<br>* pages 6-8; figures 2,3 * | 1 | |

Le présent rapport a été établi pour toutes les revendications

| Lieu de la recherche | Date d'achèvement de la recherche | Examinateur |
|---|---|---|
| BERLIN | 19-07-1990 | MARTIN A E W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)